# EUROPEAN PATENT APPLICATION

(11) **EP 3 199 234 A1**
(43) Date of publication of application: **02.08.2017**
(21) Application number: 16153324.5
(22) Date of filing: 29.01.2016
(51) Int. Cl.: B01J 20/12, B01J 20/26, B01J 20/28, B01J 20/32, B01D 53/14, B01J 20/10

(54) **POROUS FILMS COMPRISING POROUS INORGANIC MATERIALS IMPREGNATED WITH AMINE**

(71) Applicant: BASF SE, 67056 Ludwigshafen am Rhein (DE)
(72) Inventor: TOMOVIC, Zeljko, 49448 Lemfoerde (DE); SCHWAB, Matthias Georg, 68199 Mannheim (DE); BARTULI, Waldemar, 67433 Neustadt (DE); KIMURA, Riichiro, 07302 Jersey City (US); BUELOW, Mark, 08822 Flemington (US)
(74) Representative: Büchel, Edwin

(57) **Abstract**

The present invention relates to porous films comprising (A) from 51 wt.-% to 99.9 wt.-% based on the total weight of the film of at least one porous inorganic material impregnated with at least one amine; (B) from 0.1 wt.-% to 49 wt.-% based on the total weight of the film of at least one fibrillated fluoropolymer; and (C) 0 wt.-% to 48.9 wt.-% based on the total weight of the film of an additive component. The invention further relates to a composition for preparing such a film and its use.

## Description

The present invention relates to porous films comprising at least one porous inorganic material impregnated with at least one amine, and to a dry composition for preparing such films. The invention furthermore relates to the use of porous films comprising porous clay materials impregnated with amines for the reduction of the content of acid gaseous substances, particularly carbon dioxide, from gas mixtures, particularly air.

Separating off acidic gases, for example carbon dioxides, from gas mixtures is a known task. This can be carried out, for example, by absorption, in which the gas mixture passes through a liquid which takes up the undesirable components in the mixture so that a purifying effect is achieved. This process is generally referred to as a gas scrub. Suitable liquids are likewise known from the prior art. In the case of acidic gases, amines are particularly suitable for binding these.

Apart from the absorption of acidic gases such as carbon dioxide, sulfur oxides or nitrogen oxides in liquids, adsorption on solids is also possible. Here, for example, zeolites, activated carbons, inorganic materials or the like have been found to be suitable.

For some applications such as indoor air application, sorbents in liquid form are not suitable due to safety concerns and significant capital investment costs. Also, many solid sorbents by themselves tend not to work as a good CO₂ sorbents under ambient conditions. Therefore, in such cases, solid sorbents, wherein a liquid amine as active component is dispersed onto a porous solid support, are preferred. That solid sorbent can be used as a CO₂ scrubber by flowing indoor air through the solid sorbent bed to enhance contact between the amine and CO₂. In this case, powder form is not preferred due to safety concerns. Therefore, producing structural forms with powder that have mechanical stability is preferred.

WO 2012/158911 A2 relates to a sorbent for CO₂ reduction from indoor air from an enclosed space. The sorbent comprises a solid support, for example porous bentonite, and an amine-based compound, for example diethanolamine (DEA) or tetraethylenpentamine (TEPA) being supported by said support. The amine-containing support is preferably provided in the form of granules, comprising variable amounts of amine and support, for example, 30 to 50 grams of the amine and 100 g of the support.

However, the use of sorbents in the form of granule has limitations in view of a homogenous dispersion of the amine-based compound in the granule and the attrition resistance of said granule. Mechanically stable and adjustable composite films comprising clay particles modified with amines for applications like free-standing filters or membranes are currently not realizable by standard technologies due to the lack of appropriate binders and the use of solvents as processing aids. The complex technology required for the preparation of such film leads to limitations regarding upscaling, limitation to suitable very specific reaction parameters, for example the reaction temperature or the viscosity of a used polymer binder.

An air filter sheet comprising a functional agent and fibrils of a polytetrafluorethylene resin is described in US 2006/0185336 A1. The functional agent is for example an ion-exchange resin, activated carbon, zeolite, silica gel, manganese oxide, cobalt oxide, copper oxide or titanium oxide. The air filter sheet is prepared by mixing the functional agent, for example the ion-exchange resin, with polytetrafluorethylene resin and application of shearing stress to the mixture. The air filter sheet according to US 2006/0185336 A1 is used for removing ionized gaseous pollutants (for example ammonia or SOₓ), total organic compound (TOC), moisture, ozone and other foreign matter, with an abnormal odor from the air in clean rooms and the like.

Despite the methods for the reduction of the content of acid gaseous substances in a gas mixture known in the prior art, there is still a need for further methods and systems capable for the reduction of the content of an acid gaseous substance from a gas mixture with improved application properties.

It is therefore an object of the present invention to provide such a system. Moreover, it is an object of the present invention to provide an improved method for preparing such a system.

### The object is achieved by a porous film comprising

(A) from 51 wt.-% to 99.9 wt.-% based on the total weight of the film of at least one porous inorganic material (A1) impregnated with at least one amine (A2);
(B) from 0.1 wt.-% to 49 wt.-% based on the total weight of the film of at least one fibrillated fluoropolymer; and
(C) 0 wt.-% to 48.9 wt.-% based on the total weight of the film of an additive component.

Surprisingly, it has been found that the film according to the invention has an improved capability for removing acid gases, for example carbon dioxide, from gas mixtures, for example air.

Furthermore, it has been found that the preparation of freestanding films comprising at least one porous inorganic material (A1) impregnated with at least one amine (A2) is possible and the fabrication process for the film of the present invention only requires a limited number of simple steps. The fabrication process is also easily scalable.

### Component (A)

Component (A) according to the invention refers to at least one porous inorganic material (A1) impregnated with at least one amine (A2).

Accordingly, component (A) of the present invention can comprise one porous inorganic material (A1) impregnated with one amine (A2). It is also possible, that component (A) of the present invention comprises one porous inorganic material (A1) impregnated with mixtures of two or more different amines (A2).

It is also possible that mixtures of two or more different porous inorganic materials (A1) impregnated with one amine (A2) are used. It is also possible, that component (A) of the present invention comprises a mixture of two or more different porous inorganic materials (A1) impregnated with a mixture of two or more different amines (A2).

The amounts of component (A) given above therefore represent the sum of the total amount of all porous inorganic materials (A1) and the total amount of all amines (A2) in the porous film according to the invention.

Porous inorganic materials (A1) according to the present invention are all inorganic materials which fulfill the general requirements of the intended use, i.e. regarding the porosity and the specific surface area of the material (A1); and moreover have a sufficient stability under the conditions of the preparation of the porous film as well as under the conditions of the intended use.

The porous inorganic material (A1) according to the present invention comprises pores, in particular micropores and/or mesopores. Micropores are defined as pores having a diameter of 2 nm or less and mesopores are defined by a diameter in the range from 2 to 50 nm, in each case corresponding to the definition given in Pure & Applied Chem. 57 (1983), 603 - 619, in particular on page 606. The presence of micropores and/or mesopores can be checked by means of sorption measurements, with these measurements determining the uptake capacity of the porous inorganic material for nitrogen at 77 Kelvin (Langmuir Method) in accordance with DIN 66131:1993-07 and/or DIN 66134:1998-2 or according to the BET-Method ISO 9277 Date: 1-9-2010, ASTM D3663-03 Year: 2008).

The specific surface area, determined according to BET (ISO 9277 Date: 1-9-2010, ASTM D3663-03 Year: 2008) by N₂ adsorption, of a porous inorganic material (A1) according to the invention is typically in the range from 10 m²/g to 5000 m²/g preferably from 25 m²/g to 1000 m²/g, more preferably from 50 m²/g to 500 m²/g, and particularly preferably from 75 m²/g to 300 m²/g.

In a preferred embodiment, the average pore volume according to Barrett-Joyner-Halenda (BJH-pore volume, DIN ISO 15901-2 Date: 12-15-2006, ASTM D4222-03 Year: 2008) of the porous inorganic material is greater than 0.1 cm³/g and less than 3.0 cm³/g. In certain embodiments, the average pore volume is greater than 0.2 cm³/g and less than 2.0 cm³/g.

In certain embodiments, an average pore radius (e.g., BET pore radius) according to DIN ISO 15901-2 Date: 12-15-2006, ASTM D4222-03 Year: 2008 of the porous inorganic material is greater than 10 angstroms and less than 300 angstroms. In certain embodiments, the average pore radius is greater than 15 angstroms and less than 250 angstroms. In certain embodiments, the average pore radius is greater than 20 angstroms and less than 200 angstroms.

Preferred porous inorganic materials (A1) are clay materials, silica, calcium sulfate, alumina, fumed silica, activated charcoal, and mixtures thereof. Particularly preferred are clay materials.

Clays suitable for the present film are for example hydrous aluminum phyllosilicates, sometimes with variable amounts of iron, magnesium, alkali metals, alkaline earths, and other cations, for example attapulgite, sepiolite, hydrotalcite, kaolinite, dickite, halloysite, and nacrite, montmorillonite, nontronite, saponite and illite, ball clay, fullers earth, hectorite, and palygorskite. In a preferred embodiment component (A1) is clay selected from attapulgite clay, acid-activated bentonite clay, hydrotalcite clay, preferably bentonite clay, and particularly preferably acid-activated bentonite clay.

In a preferred embodiment the at least one porous inorganic material (A1) is preferably selected from attapulgite clay, acid-activated bentonite clay, hydrotalcite clay, and silica. Particularly preferred is acid-activated bentonite clay.

Amines (A2) suitable for the impregnation of porous materials, for example porous inorganic materials (A1) are known in the prior art. In general, it is possible to use at least one amine of the formula R¹N(R²)R³, wherein R¹, R², R³ are each, independently of one another, hydrogen or a branched or unbranched alkyl radical which has from 1 to 12 carbon atoms and whose carbon chain can be interrupted by one or more O or N(R⁴) groups and the alkyl radical can be unsubstituted or substituted by one or more OH or NH₂ groups, where R⁴ is hydrogen or a branched or unbranched alkyl radical having from 1 to 6 carbon atoms, with the proviso that at least one of the radicals R¹, R², R³ is different from hydrogen.

R¹, R² together with the nitrogen atom to which they are bound can optionally also form a saturated heteroaliphatic ring which has from 3 to 7 ring atoms and may, if appropriate, have one or more further heteroatoms selected from among O and N(R⁴) and be unsubstituted or substituted by one or more OH or NH₂ groups, where R⁴ is hydrogen or a branched or unbranched alkyl radical having from 1 to 6 carbon atoms.

R¹, R², R³ together with the nitrogen atom to which they are bound can optionally also form a saturated heteroaliphatic bicyclic ring which has from 7 to 11 ring atoms and may, if appropriate, have one or more further heteroatoms selected from among O and N(R⁴) and be unsubstituted or substituted by one or more OH or NH₂ groups, where R⁴ is hydrogen or a branched or unbranched alkyl radical having from 1 to 6 carbon atoms.

The at least one amine (A2) can thus be, for example, a monoalkylamine, a dialkylamine or trialkylamine. One example is diisopropylamine. Furthermore, it is possible for, for example, the alkyl chain to be interrupted by N(CH₃). An example is dimethylaminopropylamine. In addition, alkyl can be substituted by hydroxyl groups. Examples are diethanolamine, methyldiethanolamine, diisopropanolamine. Furthermore, the alkyl chain can be interrupted by oxygen and, if appropriate, bear a hydroxyl group as substituent. An example would be diglycolamine. In addition, R¹, R² can form a ring which can, if appropriate, have further ring heteroatoms such as NH. An example would be homopiperazine. It is also possible for R¹, R², R³ to form a bicyclic heterocyclic ring. An example would be urotropin.

Preferably, the at least one amine (A2) according to the invention is at least one amine (A2) comprising at least one secondary amine-group. Therefore the at least one amine (A2) comprises one or more, for example 2, 3, 4, or 5, secondary amine groups. The at least one amine (A2) can comprise one or more primary amine-groups and/or one or more tertiary amine-groups in addition to the at least one secondary amine-group.

Preferably, the at least one amine (A2) comprises at least 30%, preferably at least 50%, preferably at least 60 % secondary amine-groups based on the total number of amine-groups in the amine (A2). In an alternative, but also preferred embodiment the at least one amine (A2) comprises exclusively secondary amine-groups.

The at least one amine (A2) is preferably selected from diethanolamine, triethylenepentamine, tetraethylenepentamine, pentaethylenehexamine, triethylenetetramine, bis(2-hydroxypropyl)amine, diisopropanolamine, diisopropylamine, linear polyethylenimine, branched polyethylenimine, dimethylamine, diethylamine, homopiperazine, dimethylamino-propylamine , diglycolamine, methyldiethanolamine, methylethanolamine or polyethylene polyamines.

The at least one amine (A2) is particularly preferably selected from the group consisting of diethanolamine (DEA), methyldiethanolamine, diisopropylamine, diisopropanolamine, diglycol-amine, 3-dimethylamino-propylamine, homopiperazine, tetraethylenepentamine (TEPA) and pentaethylenehexamine (PEHA). Greater preference is given to diethanolamine, tetraethylene-pentamine and pentaethylenehexamine. Particular preference is given to diethanolamine.

### Impregnation

To obtain component (A) at least one porous inorganic material (A1) is impregnated with at least one amine (A2).

To impregnate the at least one porous inorganic material (A1), it is brought into contact with the at least one amine (A2). Of course, as mentioned above, it is also possible to use more than one porous inorganic material (A1) and/or more than one amine (A2).

The porous inorganic material (A1) is typically present here in the form of a powder, preferably in the form of a powder having a particle size d50 in the range from 1 to 1000 µm, preferably from 3 to 500 µm, preferably from 5 to 300 µm and particularly preferably from 7 to 150 µm.

The porous inorganic material (A1) can be calcined prior to the impregnation with the amine (A2). Calcining may be performed at a temperature between 400°C and 600°C in certain embodiments, or between 540°C and 580°C in other embodiments. Calcination moreover can be carried out under an air atmosphere, an inert gas flow, or any combination thereof, for a sufficient time. In a preferred embodiment the porous inorganic material (A1) is calcined prior to the impregnation. In another preferred embodiment the porous inorganic material (A1) is not calcined prior to the impregnation.

The amine (A2) is typically present here in liquid form and is taken up by the porous inorganic material without a subsequent drying step being necessary. If the amine (A2) is brought into contact in liquid form with the porous inorganic material (A1), this can be effected in pure form, as a mixture of various amines or in dissolved form, i.e. in the form of a solution, in particular as aqueous solution. If a solution is used, a plurality of amines (A2) can also be present in one solution here. It is likewise possible to use a plurality of solutions. However, the amine (A2) can also be brought into contact in the gaseous state with the porous inorganic material (A1).

Preferably, the at least one porous inorganic material (A1) is brought into contact with at least one amine (A2), wherein the at least one amine (A2) is provided in the form of a solution.

In one embodiment the solution contains one amine (A2). In another embodiment the solution comprises more than one amine (A2), for example two, three, four or five different amines (A2). For example, the solution comprises a first amine (A2) at a first concentration and a second amine (A2) at a second concentration, wherein the first amine (A2) is for example DEA and the second amine (A2) is PEHA. In one preferred embodiment, the amine comprises DEA without any further amines (A2).

Suitable solvents for the at least one amine (A2) are selected from aqueous and organic solvents, preferred are water, methanol, ethanol, n-propanol, isopropanol, or a mixture of two or more thereof, particularly preferably the solvent is water, methanol, ethanol or a mixture of two or more thereof, more preferably the solvent is water.

Thus, in a preferred embodiment the at least one amine (A2) is provided in the form of an aqueous solution.

The porous inorganic material (A1) and the amine (A2) can be brought into contact with each other by any suitable method known to the skilled person; preferably the impregnation of the at least one porous inorganic material (A1) is carried out by any method of wet impregnation, for example spraying, dripping or immersion with a solution of the amine (A2).

The wet impregnation of the at least one porous inorganic material (A1) typically is carried out at a temperature in the range from 0 to 100°C, preferably from 40 to 70°C, and is preferably carried out under inert gas atmosphere, for example nitrogen or noble gases or mixtures thereof. It is also possible to carry out the impregnation under air or vacuum.

In the case, the amine (A2) is provided in the form of a solution, the step of bringing said solution into contact with the at least one porous inorganic material (A1) is followed by a drying step. The drying step is preferably carried out at elevated temperatures and/or under reduced pressure, and preferably under an inert gas atmosphere, for example nitrogen or noble gases or mixtures thereof, wherein the applied temperature and/or pressure is selected such that the solvent is removed almost completely, preferably completely. Preferably, the solvent content after the drying step is less than 10 % by weight, preferably less than 5 % by weight, preferably less than 1 % by weight, based on component (A) and particularly preferably the solvent is removed completely.

In a preferred embodiment the drying step is carried out at a temperature in the range from 0 to 100°C, preferably from 40 to 70°C. Preferred pressure range is from 0.007 bar to 0.04 bar, preferably 0.02 to 0.035 bar.

In a preferred embodiment of the invention the impregnation comprises the step of
- bringing the at least one porous inorganic material (A1) into contact with an aqueous solution of least one amine (A2),
- drying the obtained porous inorganic material (A1) impregnated with at least one amine (A2).

The amounts of the at least one porous inorganic material (A1) and the at least one amine (A2) are selected in such a way, that the resulting component (A) comprises the desired proportions of the specific porous inorganic material(s) (A1) and the amine(s) (A2). The preferred proportion of amine (A2) may vary, depending on the nature of the porous inorganic material(s) (A1) and the nature of the used amine(s) (A2).

The amount of amine (A2) in component (A), i.e. the impregnated porous inorganic material, is for example in the range from 10 to 50 % by weight, preferably from 20 to 40 % by weight and particularly preferably from 25 to 35 % by weight based on the total weight of the impregnated porous inorganic material, i.e. component (A).

Thus, in other words, component (A) comprises, preferably consists of,
(A1) 50 to 90 % by weight, preferably 60 to 80 % by weight and particularly preferably 65 to 75 % by weight of at least one porous inorganic material (A1), and
(A2) 10 to 50 % by weight, preferably 20 to 40 % by weight and particularly preferably 25 to 35 % by weight of the at least one amine (A2),
wherein the given amounts are each based on the total weight of component (A). In this context the term "amine" refers to the amine in unmodified form, i.e. in the form it was used, as well as in modified form, wherein the modified form is a result of the interaction of the amine (A2) with the at least one porous inorganic material (A1), wherein the nature of the amine is changed, e.g. by the formation of chemical bonds. Therefore the term "impregnation" for the purpose of the invention refers to all forms of chemical and physical interactions, which are possible and which can occur between the porous inorganic material (A1) and the amine (A2), particularly adsorption and absorption.

The film according to the invention is preferably a film, wherein component (A) is obtained by impregnation of
(A1) 50 to 90 % by weight of at least one porous inorganic material (A1); with
(A2) 10 to 50 % by weight of at least one amine (A2);
wherein the given amounts are each based on the total weight of component (A).

In a preferred embodiment, the sum total of the at least one porous inorganic material (A1) and the at least one amine (A2) in component (A) is 100 % by weight.

After impregnation of the porous inorganic material (A1) with the at least one amine (A2), the obtained component (A), i.e. the impregnated inorganic material, typically has a significantly lower specific surface area than the used porous inorganic material (A1). This can be explained by the amine (A2) at least partly filling the pores, so that a lower porosity is determined.

Typical specific BET-surface areas of components (A) are in the range from 0.01 to 1000 m²/g, preferably from 0.1 m²/g to 500 m²/g, particularly preferably from 0.5 m²/g to 300 m²/g, preferably from 1.0 m²/g to 100 m²/g. Also preferably, the specific BET-surface areas of component (A) is in the range from 0.01 m²/g to 100 m²/g, preferably 0.1 m²/g to 50 m²/g, preferably 0.5 m²/g to 20 m²/g and particularly preferably 1.0 m²/g to 10 m²/g.

### Component (B)

Component (B) according to the invention is at least one fibrillated fluoropolymer.

In order to provide the porous film the use of component (B) is required as film "inducing" agent. Fibrillated fluoropolymers are known in the art. Starting from a fluoropolymer capable of processing-induced fibrillation the polymer, optionally as part of a mixture, is subject to sufficient shear force to induce fibrillation.

It is clear to the practitioner in the art that the film can comprise one, two different or more differrent fluoropolymers. Accordingly the term "at least one fluoropolymer" refers to one or more, for example two, three or four, fluoropolymers. The weight percentages given for component (B) refer to all fluoropolymers in the film and thus can be calculated from the sum of fluoropolymers. However, it is preferred that only one fluoropolymer is present in the film.

In a preferred embodiment the at least one fibrillated fluoropolymer is selected from the group of polymers and copolymers consisting of trifluoroethylene, hexafluoropropylene, monochlorotrifluoroethylene, dichlorodifluoroethylene, tetrafluoroethylene, perfluorobutyl ethylene, perfluoro-(alkyl vinyl ether), vinylidene fluoride, and vinyl fluoride and blends thereof. More preferably, the at least one fluoropolymer is a fibrillated polytertrafluoroethylene (PTFE).

In a particularly preferred embodiment the at least one fibrillated fluoropolymer is a fibrillated polytetrafluoroethylene (PTFE).

Such fibrillated PTFE is known in the art, e.g. from US 2003/0219587 A1, US 4,379,772 A, US 2006/0185336 A1, US 4,153,661 A and US 4,990,544. Accordingly, it has been recognized that, when subjected to shear forces, small particles of certain polymeric materials, e. g., per-fluorinated polymers such as PTFE, will form fibrils of microscopic size. Using this knowledge, Ree et al. described in the late 1970s in US 4,153, 661 A a PTFE composite sheet for use as an electronic insulator, a battery separator, and/or a semipermeable membrane for use in separation science. Formation of the tough, attractive, and extremely pliable film involved intensive mixing of the PTFE and lubricant mixture sufficient to cause the PTFE fibrils to fibrillate and form a sheet. Thus, the fibrils of polytetrafluoroethylene resin can be obtained by applying a shearing stress to particles of polytetrafluoroethylene resin (US 2006/0185336 A1). US 4,990,544 relates to a composition comprising fibrillated polytetrafluoroethylene resin and a fine inorganic powder. Said composition is used as a gasket material.

The PTFE resin can have a number average molecular weight of 3,000,000 to 50,000,000 g/mol, preferably from 5,000,000 to 15,000,000 g/mol, as described in US 2006/0185336 A1.

Suitable PTFE grades are commercially available such as Teflon manufactured by E. I. du Pont de Nemours & Company; Fluon manufactured by ASAHI GLASS CO., LTD. of Japan and Dyneon manufactured by the 3M Company, St. Paul, Minnesota.

### Component (C)

The porous film according to the invention may further comprise an additive component (C).

The additive component (C) may vary based on the application of the film according to the present invention.

Suitable additives are known to the practitioner in the art. Preferably, the additive component (C) comprises at least one additive selected from the group consisting of electrically or thermally conducting particles, thermoplastic polymers, liquids, surfactants, dispersants, antioxidants, UV absorbers/light stabilizers, metal deactivators, antistatic agents, reinforcing agents, fillers, nucleating agents, antifogging agents, biocides, plasticisers, lubricants, emulsifiers, colorants, pigments, rheology additives, mold release agents, tackifiers, catalysts, flow-control agents, optical brighteners, flameproofing agents, antidripping agents, and blowing agents.

Preferred additives are electrically conducting particles.

Suitable electrically conducting particles are metals, like titanium, zirconium, hafnium, vanadium, niobium, tantalum, chromium, molybdenum, tungsten, manganese, rhenium, iron, ruthenium, osmium, cobalt, rhodium, iridium, nickel, platinum, palladium, copper, silver, gold, zinc, aluminum, tin, lead, metals from the lanthanide series; metal alloys like steel; carbon materials, like carbon black, activated carbon, graphite, expanded graphite, expandable graphite, carbon fibers, carbon nanotubes, fullerenes, graphene, coal, and coke.

Also preferred additives are thermally conducting particles.

Suitable thermally conducting particles are selected for example from the group consisting of metals, like the metals mentioned as electrically conducting particles, especially silver, copper and iron, boron nitride, aluminum nitride, aluminum oxide, and silicon carbide.

It is clear to a practitioner in the art that an electrically conducting particle may also be used as thermally conducting particle and vice versa based on its material properties. Thus an electrically or thermally conducting particle, like a metal, may be used as electrically conducting particle, as thermally conducting particle or both, electrically and thermally conducting particle.

Also preferred additives are thermoplastics.

Thermoplastics (thermoplastic polymers) are plastics which yield solid materials upon cooling of a polymer melt and soften upon heating, the shaping of a thermoplastic thus being a reversible process. They are normally composed of relatively high molar mass molecules and form the major part of plastics. Examples are vinylaromatic polymers, like polystyrene (including high impact polystyrene), acrylonitrile/butadiene/styrene (ABS) and styrene/acrylonitrile polymers (SAN); poly(phenylene oxide) (PPO), PPO-polyamide alloys, polyethersulfones (PESU), polysulfones (PSU), polyphenylsulfones (PPSU; PPSF), polyetherketones (PEK), polyetheretherketones (PEEK), polyolefins, ethylene/vinyl alcohol (EVOH) copolymers, polyimides, polyacetals, like polyoxymethylenes (POM); polyetherimides, fluoropolymers, fluorinated ethylene propylene polymers (FEP), poly(vinyl fluoride), poly(vinylidene fluoride), poly(vinylidene chloride), poly(vinyl chloride), poly(acrylonitrile), polycarbonates (PC), polyamides, thermoplastic polyurethanes (TPU), polyesters, such as poly(butylene terephthalate) (PBT), poly(ethylene terephthalate) (PET), poly(1,3-propylene terephthalate) (PPT), poly(ethylene naphthalate) (PEN), and poly(cyclohexanedimethanol terephthalate) (PCT); and liquid crystalline polymers (LCP).

Suitable conventional additives comprise for example surfactants, dispersants, antioxidants, UV absorbers/light stabilizers, metal deactivators, antistatic agents, reinforcing agents, fillers, nucleating agents, antifogging agents, biocides, plasticisers, lubricants, emulsifiers, colorants, pigments, rheology additives, mold release agents, tackifiers, catalysts, flow-control agents, optical brighteners, flameproofing agents, antidripping agents, and blowing agents and the like.

The choice of suitable additives depends in each case on the specific nature of the film as well as on the end use of the film to be produced and can be established by the skilled person.

Further details concerning the abovementioned additives are available in the technical literature, e.g. Plastics Additive Handbook, 5th edition, H. Zweifel (Ed.), Hanser Publishers, Munich, 2001.

Suitable fillers or reinforcing agents comprise, for example, pigments, calcium carbonate, silicates, talc, mica, kaolin, bentonite, barium sulfate, metal oxides and metal hydroxides, wood flour and fine powders or fibers of other natural products, and synthetic fibers. Examples of suitable fibrous or pulverulent fillers further include carbon fibers or glass fibers in the form of glass fabrics, glass mats or filament glass rovings, chopped glass, glass beads, and wollastonite and the like.

Examples for lubricants are metal soaps, such as calcium stearate, magnesium stearate or zinc stearate, butyl stearate, palmityl stearate, glycerol monostearate, ethylene bisstearyl amide, methylene bisstearyl amide, palmitic amide, stearic acid, behanic acid, polyethylene wax and the like.

Preferably, the additive component comprises carbon black.

### Porous film

The porous film according of the invention is freestanding or supported.

In case the film is supported any suitable support can be used. Such support can be porous, partly porous or non-porous. The support can be mono- or multi-layered. The support can be thermally and/or electrically conducting, semiconducting or insulating. A rigid or flexible support is possible. Examples for suitable supports include metals, like titanium, zirconium, hafnium, vanadium, niobium, tantalum, chromium, molybdenum, tungsten, manganese, rhenium, iron, ruthenium, osmium, cobalt, rhodium, iridium, nickel, platinum, palladium, copper, silver, gold, zinc, aluminum, tin, lead, metals from the lanthanide series; metal alloys like steel; carbon substrates; meshes; fabrics; cellulose materials, like paper and wood; ceramics; semi-conductors, like silicon, germanium, gallium arsenide, indium phosphide, glass; quartz; metal oxides, like aluminum oxide, silicon oxide, zirconium oxide and indium tin oxide; silicon carbide; polymers and the like.

The film can be supplied to the support after its preparation by suitable deposition methods. Examples for such methods are adhesion coating using an adhesive, which can also be part of the film as an additive component (C) or only using adhesion forces of the film when stamping, pressing, molding or embossing the film onto the support.

Preferably, the film has a thickness of at least 0.5 µm, more preferably 1 µm to 20 cm, even more preferably 3 µm to 10 cm, even more preferably 5 µm to 1 cm, even more preferably 10 µm to 1 mm when the film is freestanding and at least 0.5 µm, more preferably 1 µm to 20 cm, even more preferably 3 µm to 10 cm, even more preferably 5 µm to 1 cm, even more preferably 10 µm to 1 mm when the film is supported.

In case the film has different thicknesses the lower value of a range represents the minimum value of all thickness values and the upper value of a range represents the maximum value of all thicknesses.

Preferably, the film has a two-dimensional surface with at least one dimension which exceeds 1 cm. The length of the film can be adjusted as required for a specific application. In principle the length is not limited. Thus also coils of films are possible. In this case it is advantageous to separate each film layer from each other by separation means, like a release agent or separating foil.

Preferably, the porous film is freestanding.

The impregnated porous inorganic material used as component (A) of the film according to the present invention as well as the film of the present invention comprise pores, in particular micropores and/or mesopores. Micropores are defined as pores having a diameter of 2 nm or less and mesopores are defined by a diameter in the range from 2 to 50 nm (Pure & Appl. Chem. 57 (1985) 603-619). The presence of micropores and/or mesopores can be checked by means of sorption measurements, with these measurements determining the uptake capacity of the porous inorganic material for nitrogen at 77 Kelvin in accordance with DIN 66134:1998-02.

Preferably, the specific surface area of the film measured according to BET (ISO 9277 Date: 1-9-2010, ASTM D3663-03 Year: 2008) is at least 5 m²/g, more preferably, at least 10 m²/g, more preferably, at least 20 m²/g, more preferably, at least 50 m²/g, more preferably, at least 100 m²/g, more preferably at least 250 m²/g, even more preferably at least 500 m²/g, in particular at least 800 m²/g.

Preferably, the volumetric specific surface area of the film is at least 1 m²/cm³, more preferable at least 3 m²/cm³. The volumetric specific surface area can be calculated by determining the product of specific surface area [m²/g] of the film and the density [g/cm³] of the film.

Preferably, the film is flexible. Accordingly, the film can be bended, twisted, rolled, folded or presented as flat film.

Preferably, the amounts of (A), (B) and (C) based on the total weight of the film are 51 weight percent (wt.-%) to 99.9 wt.-% of (A), 0.1 wt.-% to 49 wt.-% of (B) and 0 wt.-% of (C). More preferably, the amounts based on the total weight of the film are 75 wt.-% to 99 wt.-% of (A), 1 wt.-% to 25 wt.-% of (B) and 0 wt.-% of (C). Even more preferably, the amounts based on the total weight of the film are 80 wt.-% to 98 wt.-% of (A), 2 wt.-% to 20 wt.-% of (B) and 0 wt.-% of (C). Even more preferably, the amounts based on the total weight of the film are 85 wt.-% to 98 wt.-% of (A), 2 wt.-% to 15 wt.-% of (B) and 0 wt.-% of (C).In a particularly preferred embodiment, the amounts based on the total weight of the film are 93 wt.-% to 97 wt.-% of (A), 3 wt.-% to 7 wt.-% of (B) and 0 wt.-% of (C).

In a preferred embodiment the sum total of component (A) and component (B) in the porous film according to the invention is 100 % by weight.

Preferably, the amounts based on the total weight of the film are 51 wt.-% to 99.8 wt.-% of (A), 0.1 wt.-% to 48.9 wt.-% of (B) and 0.1 to 48.9 wt.-% of (C). More preferably, the amounts based on the total weight of the film are 51 wt.-% to 98 wt.-% of (A), 1 wt.-% to 15 wt.-% of (B) and 1 wt.-% to 34 wt.-% of (C).

More preferably, the amounts based on the total weight of the film are 55 wt.-% to 95 wt.-% of (A), 2 wt.-% to 15 wt.-% of (B) and 3 wt.-% to 30 wt.-% of (C). More preferably, the amounts based on the total weight of the film are 61 wt.-% to 95 wt.-% of (A), 2 wt.-% to 12 wt.-% of (B) and 3 wt.-% to 27 wt.-% of (C).

In a preferred embodiment the sum total of component (A), component (B) and component (C) in the porous film according to the invention is 100 % by weight.

### Dry composition

A further aspect of the invention is a dry composition, comprising
(A) from 51 wt.-% to 99.9 wt.-% based on the total weight of the composition of at least one porous inorganic material (A1) impregnated with at least one amine (A2);
(B) from 0.1 wt.-% to 49 wt.-% based on the total weight of the composition of a fluoropolymer capable of processing-induced fibrillation; and
(C) 0 wt.-% to 48.9 wt.-% based on the total weight of the composition of an additive component.

This composition can be used as starting material for the preparation of the film.

For the purpose of the invention the term "dry" means that all components in the composition are brought into contact with each other without adding any liquid respectively any solvent. In a preferred embodiment the term "dry" moreover means that all components in the composition are solid at ambient temperature.

Preferred aspects of the composition of the present invention are those described for the film of the invention above, as far as the components (A), (A1), (A2), (B) and (C) are concerned.

In a preferred embodiment of the invention, the sum of components (A) and (B) in the dry composition is 100 % by weight. In another preferred embodiment of the invention, the sum of components (A), (B) and (C) in the dry composition is 100 % by weight.

A fluoropolymer capable of processing-induced fibrillation refers to a fluoropolymer which is already at least partly or fully fibrillated or can be fibrillated in a later processing step. In a preferred embodiment the fluoropolymer capable of processing-induced fibrillation is polytetrafluoroethylene.

A further aspect of the present invention is a method of preparing a film of the present invention, comprising the steps of
(a) preparing a composition as described above;
(b) converting the composition into the film.

Preferably, step (a) includes a fibrillation step. Furthermore is preferred that components (A) and optionally (C) can be mixed with component (B) in unfibrillated form and the resulting mixture is then subjected to fibrillation of component (B). Alternatively, the fibrillated component (B) is mixed with components (A) and optionally (B). The converting in step (b) can comprise a calendering step.

In general it is possible to prepare the composition in step (a) by adding component (B) in at least partly fibrillated form. Furthermore it is possible to carry out the fibrillation step at least partly in step (a) and/or in step (b). Thus it is possible that filbrillation occurs before step (a), during step (a) and/or during step (b).

Typically, the preparation of the composition in step (a) includes a mixing step. A suitable mixer is any mixer or kneader that can subject the mixture to sufficient shear forces to fibrillate the fluoropolymer at the desired processing temperature. Exemplary commercially available batch mixers include the Banbury mixer, the Mogul mixer, the C. W. Brabender Prep mixer, and C. W. Brabender sigma-blade mixer. Known mixer types are Ribbon Blender, V Blender, Continuous Processor, Cone Screw Blender, Screw Blender, Double Cone Blender, Double Planetary, High Viscosity Mixer, Counter-rotating, Double & Triple Shaft, Vacuum Mixer, High Shear Rotor Stator, Dispersion Mixers, Paddle, Jet Mixer, Mobile Mixers, Drum Blenders, banbury mixer, intermix mixer, Planetary mixer.

Step (b) refers to the conversion of the composition to the film. Suitable processes for producing the film are for example ram extrusion, piston extrusion, film extrusion by single or double screw extruders, extrusion followed by a forming process (thermoforming, vacuum forming), calendering, pressing, hotpressing, lamination, injection molding, compression molding, blow molding, rotomolding and the like. Optionally, the film producing step can be followed by a stretching step to orient the fibrillated fluoropolymer for greater strength.

### Use of the porous film

A further aspect of the present invention is the use of a film according to the present invention for removing CO₂ from a gas mixture. Preferably, the gas mixture is air.

Preferably the film according to the present invention is used to remove CO₂ from air in a room or a vehicle, particularly preferably to remove CO₂ from the air in the car cabin. The use of the improved CO₂ adsorbent according to the invention allows the recirculation of indoor air. As a consequence the amount of outside air brought into the room or into the car cabin is reduced and furthermore the need to condition outside air. Thereby the energy consumption of HVAC (Heating, Ventilation and Air Conditioning) systems, particularly in cars, is reduced.

Preferably, CO₂ is removed from a gas mixture comprising CO₂ by contacting the gas mixture with the porous film according to the invention. Preferably the contacting is carried out at a temperature in the range from 0°C to 50°C. Preferably, the contacting is carried out at the partial pressure of the gas mixture is not more than 10 bar.

The adsorption of CO₂ occurs at typical indoor air condition (for example between 25°C and 30°C at 1000 ppm CO₂), and the desorption occurs at typical outdoor air condition in hot climate area (for example between 45°C and 50°C at 400 ppm CO₂).

The film according to the invention can also be used as a selective sensor for chemical vapors and gases, as storage and separation device.

The present invention is illustrated by means of the examples below.

### Examples

### Analytical Methods

The specific surface areas were measured according to the BET-method (ISO 9277:1-9-2010, ASTM D3663-03:2008).

The average pore volume and the BET average pore radius were measured according to Barrett-Joyner-Halenda (BJH) according to DIN ISO 15901-2 Date: 12-15-2006, ASTM D4222-03 Year: 2008.

Acid-activated bentonite clay powder was used in the following examples as porous support. A BET average surface area of the powder was 292 m²/g, a BJH average pore volume of the powder was 0.339 cm³/g and the BET average pore radius was 25.7 angstroms. 85 wt% of the particles had the particle size less than 75 µm (wt% thru 200 mesh).

| | BET-surface | BJH-pore volume | BET-pore radius | particle size |
|---|---|---|---|---|
| acid-activated bentonite clay | 292 m²/g | 0.339 cm³/g | 25.7 angstrom | 85 wt% of the particles had a particle size less than 75 µm (wt% thru 200 mesh) |

CO₂ adsorption capacity measurement

CO₂ adsorption capacity was measured by placing the film in a packed bed reactor. Adsorption was measured over 60 minutes at 25°C for an air flow of 0.1 m/second with a CO₂ concentration of 1000 ppm with 0% water by volume (to simulate indoor air conditions). Desorption was measured over 30 minutes at 50°C for an air flow of 0.2 m/s with a CO₂ concentration of 400 ppm with 1 % water (to simulate outdoor air conditions). The performance of CO₂ sorbent was measured by amine capture efficiency (adsorbed CO₂ (mg) per amine impregnated in the sorbent (g)).

### Example 1: Impregnation of the acid-activated bentonite clay with diethanolamine

Diethanolamine (DEA) (Sigma-Aldrich, puriss. p.a., ACS reagent, ≥99.0%) was impregnated onto acid-activated bentonite clay. Prior to impregnation, the acid-activated bentonite clay was calcined at 560°C for 2 hours. DEA was melted by being heated at 60°C for approximately 2 hours under nitrogen atmosphere. DEA (95.7 g) was added to 57.6 g of distilled water to produce a DEA solution. The calcined acid-activated bentonite clay powder (240.0 g) and the DEA solution were heated at 60°C for 15 minutes under nitrogen atmosphere, and the DEA solution was poured into acid-activated bentonite clay powder while stirring vigorously for 5 minutes, resulting in a DEA-impregnated sorbent. The DEA-impregnated sorbent was dried at 60°C for 2 hours under nitrogen atmosphere. The specific BET surface of the impregnated calcined acid-activated bentonite clay powder was 1.025 m²/g.

### Example 2: Fabrication of a freestanding film comprising DEA/bentonite

19 g of DEA/bentonite clay powder prepared in Example 1 and 1 g of poly(tetrafluoroethylene) powder (DuPont, Teflon 6CN X-EF) were placed in a mortar and mixed. By this, a weight ratio of 95/5 of DEA/bentonite clay to poly(tetrafluoroethylene) was adjusted. After an intimate powder mixture was obtained pressure then was applied to the pestel in order to induce fibrillation of the poly(tetrafluoroethylene) component.

After a homogenous beige putty-like mass was obtained, the obtained material was transferred to a calender and formed into a free-standing flexible film. The gap of the calender was used to progressively decrease the thickness of the film to a final level of 0.52 mm as determined by a thickness gage (Digimatic Indicator TYPE ID-110M, Mitutoyo). The obtained beige film was trimmed into a rectangular geometry (20 cm x 13 cm) with a blade and its weight was determined to be 13.3 g using a laboratory balance. The film density can thus be calculated and was found to be 1 g/cm³. The BET average surface area of the freestanding film was 29.1 m²/g.

### Comparative Example 3: Fabrication of granulate comprising acid-activated bentonite impregnated with diethanolamine

Acid-activated bentonite based clay granule was prepared by wet granulation method. 15wt% of attapulgite based clay as an inorganic binder was added into 85wt% of acid-activated bentonite based clay for granulation process and the granule with a diameter of 0.5 to 1.0 mm was sieved and used for the subsequent amine impregnation.

Prior to impregnation, the granule was calcined at 560°C for 2 hours. DEA was melted by being heated at 60°C for approximately 2 hours under nitrogen atmosphere. DEA (18.0 g) was added to 0.6 g of distilled water to produce a DEA solution. The calcined granule (41.4 g) and the DEA solution were heated at 60°C for 15 minutes under nitrogen atmosphere, and the DEA solution was poured into the granule while stirring vigorously for 5 minutes, resulting in a DEA-impregnated sorbent. The DEA-impregnated sorbent was dried at 60°C for 2 hours under nitrogen atmosphere.

### Example 4: Uptake of carbon dioxide in the inventive film

The CO₂ adsorption capacity of the film according to example 2 was tested by the method for CO₂ adsorption capacity measurement described above. The amount of the film that was placed in the reactor was 0.59 g.

The amine capture efficiency (adsorbed CO₂ (mg) per amine impregnated in the sorbent (g)) was 76.92 mg/g.

### Comparative Example 5: Uptake of carbon dioxide in the comparative granulate

The CO₂ adsorption capacity of the granule according to comparative example 3 was tested by the method for CO₂ adsorption capacity measurement described above. The amount of the granule that was placed in the reactor was 23.28 g.

The amine capture efficiency (adsorbed CO₂ (mg) per amine impregnated in the sorbent (g)) was 27.22 mg/g.

## Claims

1. A porous film comprising
(A) from 51 wt.-% to 99.9 wt.-% based on the total weight of the film of at least one porous inorganic material (A1) impregnated with at least one amine (A2);
(B) from 0.1 wt.-% to 49 wt.-% based on the total weight of the film of at least one fibrillated fluoropolymer; and
(C) 0 wt.-% to 48.9 wt.-% based on the total weight of the film of an additive component.

2. The film according to claim 1, wherein the film is freestanding.

3. The film according to claim 1 or 2, wherein the film has a thickness of at least 0.5 µm.

4. The film according to any of claims 1 to 3, wherein the film has a two-dimensional surface with at least one dimension which exceeds 1 cm.

5. The film according to any of claims 1 to 4, wherein the specific surface area of the film measured according to BET is at least 5 m²/g.

6. The film according to any of claims 1 to 5, wherein the volumetric specific surface area of the film is at least 1 m²/cm³.

7. The film according to any of claims 1 to 6, wherein component (A) is obtained by impregnation of
(A1) 50 to 90 % by weight of at least one porous inorganic material (A1); with
(A2) 10 to 50 % by weight of at least one amine (A2);
wherein the given amounts are each based on the total weight of component (A).

8. The film according to any of claims 1 to 7, wherein the amounts based on the total weight of the film are 51 wt.-% to 99.9 wt.-% of (A), 0.1 wt.-% to 49 wt.-% of (B) and 0 wt.-% of (C).

9. The film according to any of claims 1 to 8, wherein the amounts based on the total weight of the film are 51 wt.-% to 99.8 wt.-% of (A), 0.1 wt.-% to 48.9 wt.-% of (B) and 0.1 to 48.9 wt.-% of (C).

10. The film according to any of claims 1 to 9, wherein the at least one porous inorganic material (A1) is selected from attapulgite clay, acid-activated bentonite clay, hydrotalcite clay, and silica.

11. The film according to any of claims 1 to 10, wherein the at least one amine (A2) comprises at least one secondary amine group.

12. The film according to any of claims 1 to 11, wherein the at least one amine (A2) is diethanolamine.

13. The film according to any of claims 1 to 12, wherein the at least one fibrillated fluoropolymer is a fibrillated polytetrafluoroethylene.

14. The film according to any of claims 1 to 13, wherein the additive component (C) comprises at least one additive selected from the group consisting of electrically or thermally conducting particles, thermoplastic polymers, liquids, surfactants, dispersants, antioxidants, UV absorbers/light stabilizers, metal deactivators, antistatic agents, reinforcing agents, fillers, nucleating agents, antifogging agents, biocides, plasticisers, lubricants, emulsifiers, colorants, pigments, rheology additives, mold release agents, tackifiers, catalysts, flow-control agents, optical brighteners, flameproofing agents, antidripping agents, and blowing agents.

15. A dry composition, comprising
(A) from 51 wt.-% to 99.9 wt.-% based on the total weight of the composition of at least one porous inorganic material (A1) impregnated with at least one amine (A2);
(B) from 0.1 wt.-% to 49 wt.-% based on the total weight of the composition of a fluoropolymer capable of processing-induced fibrillation; and
(C) 0 wt.-% to 48.9 wt.-% based on the total weight of the composition of an additive component.

16. A method of preparing a film according to any of claims 1 to 14, comprising the steps of
(a) preparing a composition of claim 15;
(b) converting the composition into the film.

17. The method of claim 16, wherein step (a) includes a fibrillation step.

18. Use of a film according to any of claims 1 to 14 for removing CO₂ from a gas mixture.
